# EUROPÄISCHE PATENTSCHRIFT

(11) **EP 1 963 781 B1**
(45) Veröffentlichungstag und Bekanntmachung des Hinweises auf die Patenterteilung: **23.06.2010**
(21) Anmeldenummer: 06829248.1
(22) Anmeldetag: 02.12.2006
(51) Int. Cl.: G01B 11/00

(54) **ABTASTSYSTEM ZUM ABTASTEN EINER OBJEKTOBERFLÄCHE, INSBESONDERE FÜR EINE KOORDINATEN-MESSMASCHINE**
SCANNING SYSTEM FOR SCANNING AN OBJECT SURFACE, IN PARTICULAR FOR A COORDINATE MEASUREMENT MACHINE
SYSTEME PALPEUR QUI PALPE LA SURFACE D'UN OBJET, EN PARTICULIER POUR MACHINE DE MESURE DE COORDONNEES

(30) Priorität: 23.12.2005 DE 102005062130
(43) Veröffentlichungstag der Anmeldung: 03.09.2008
(73) Patentinhaber: ISIS Sentronics GmbH, 68199 Mannheim (DE)
(72) Erfinder: KNÜTTEL, Alexander, 69488 Birkenau (DE)
(74) Vertreter: Pfeifer, Hans-Peter
(86) Internationale Anmeldenummer: PCT/EP2006/011586
(87) Internationale Veröffentlichungsnummer: WO 2007/079837

(56) Entgegenhaltungen:
- EP-A1- 1 134 543
- WO-A-03/076127
- WO-A1-2005/088241
- DE-A1- 19 640 495
- US-B1- 6 687 010

## Beschreibung

Auf zahlreichen Anwendungsgebieten stellt sich die Aufgabe, die Oberfläche eines Objektes genau abzutasten. Der Begriff "abtasten" (englisch: "to scan") ist dabei allgemein in dem Sinn zu verstehen, daß er sich auf jedes Verfahren bezieht, bei dem eine Mehrzahl von Meßpunkten an einer Oberfläche gewonnen werden, um eine Information- über deren Form im Raum zu erhalten. Insbesondere geht es um die Bestimmung der exakten Dimensionen eines Objektes ("dimensionelles Prüfen"), aber auch um Struktureigenschaften der Oberfläche, also beispielsweise deren Rauhigkeit.

Das erfindungsgemäße Abtastsystem eignet sich insbesondere als sogenannter "Tastsensor" (scan sensor) für Koordinaten-Meßmaschinen, die beispielsweise in industriellen Fertigungsbetrieben, aber auch in Labors zum dimensionellen Prüfen einschließlich der Ermittlung von Oberflächenstrukturen und Strukturfehlern eingesetzt werden. Solche Koordinaten-Meßmaschinen haben einen mehrdimensionalen hochpräzisen Antrieb, mit dem ein Tastsensor relativ zu dem zu prüfenden Objekt bewegt wird, wobei dessen Oberfläche von dem Tastsensor abgetastet wird. Ein anderes wichtiges Anwendungsgebiet sind Positionsroboter.

Als Tastsensoren werden hauptsächlich mechanische Taster eingesetzt, die das Meßobjekt mit einer dünnen Spitze oder kleinen Kugel berühren, wobei diese Berührung mit elektronischen Mitteln detektiert wird. Mit hohem Aufwand kann eine sehr gute Genauigkeit mechanischer Taster bis in den sub-µm-Bereich erreicht werden, jedoch ist das Berühren beim Messen von Objekten mit erheblichen Nachteilen verbunden, weil einerseits die Abtastgeschwindigkeit und damit die gesamte Meßzeit hoch ist und andererseits bei empfindlichen oder elastischen Oberflächen Beschädigungen oder Meßwertabweichungen unvermeidlich sind.

Berührungslose Abtastsensoren basieren in der Regel auf der Bildverarbeitungstechnik. Das Meßobjekt wird mit speziellen Beleuchtungstechniken (Dunkelfeld, Hellfeld, Durchlicht) beleuchtet und mittels Videotechnik beobachtet, wobei die Ergebnisse mittels Bildverarbeitungssoftware ausgewertet und in die gewünschten Dimensionsinformationen umgewandelt werden. Diese Technik eignet sich jedoch nur für bestimmte Objekte und erfordert große und aufwendige Sensoren.

Für spezielle Zwecke werden auch andere mit optischen Mitteln arbeitende Sensoren verwendet, beispielsweise Laserabstandssensoren, die speziell zum schnellen Messen der Ebenheit eines Meßobjektes und zur Messung von wenig gekrümmten Freiformflächen empfohlen werden, oder Glasfasersensoren mit sehr feinen Glasfasern, deren Verbiegung beim Auftreffen auf die Oberfläche optisch beobachtet wird.

Auf dieser Grundlage befaßt sich die Erfindung mit dem technischen Problem, ein kompaktes, sehr genaues, schnelles und kostengünstig herstellbares Abtastsystem zur Verfügung zu stellen.

Das technische Problem wird gelöst durch ein Abtastsystem zum Abtasten der Oberfläche eines Objektes nach Anspruch 1. Es ist insbesondere zum dimensionellen Prüfen geeignet, vor allem in Verbindung mit einer Koordinaten-Meßmaschine. Das von der Lichtquelle der verwendeten optischen Meßanordnung ausgehende Licht wird hier als Primärlicht, das an dem Objekt oder einem Referenzreflektor reflektierte Licht als Sekundärlicht bezeichnet. Der Rotations-Translations-Antrieb ist vorzugsweise an dem Lagerteil befestigt.

Der bei der Erfindung verwendete optische Abtastsensor mit mindestens einem fluidgelagerten Lichttransportmodul ermöglicht auf engstem Raum und mit einer sehr kleinen bewegten Masse die Integration der einerseits für den Lichttransport (Optik) und andererseits für die Abtastbewegung (Aktorik) notwendigen Funktionskomponenten. Dabei eignet sich die Erfindung grundsätzlich für unterschiedliche optische Messverfahren. Beispielsweise kann eine confokale Meßanordnung verwendet werden, bei der Licht fokussiert von dem Lichttransportmodul abgestrahlt und detektiert wird, wobei eine Differenzierung in Strahlrichtung ("Longitudinal-Abtastung") durch Variation der Fokussierung erreicht wird.

Aus dem Stand der Technik sind verschiedene Abtastsysteme bekannt, die ein rotierbar und axialverschiebbar gelagertes Lichttransportmodul einschließen. Dabei wird auf die Art der Lagerung entweder nicht eingegangen (WO 2005/088241 A1) oder es werden Wälzlager (US-B1-6687010) oder Gewindelager (DE 19640495 A1) eingesetzt.

Insbesondere eignet sich die Erfindung zur Abtastung mittels einer Kurzkohärenz-Interferometeranordnung. Allgemein dienen Kurzkohärenz-interferometer (auch "Weißlichtinterferometer") zur lichtoptischen Abtastung durch Detektion der Position von lichtremittierenden Stellen, die in unterschiedlichen Abständen von dem Gerät längs einer in Abtastrichtung (d.h. in Richtung des detektierenden Lichtstrahls; Longitudinal-Abtastung) verlaufenden Strecke lokalisiert sind. Dieses Verfahren wird auch als "Low Coherence Distance Scan (LCDS)" bezeichnet.

Gemeinsam ist allen LCDS-Verfahren, daß Licht einer kurzkohärenten (spektral breitbandig emittierenden) Lichtquelle in zwei Lichtwege, nämlich einen Meßlichtweg, der auf das Meßobjekt gestrahlt wird, und einen Referenzlichtweg aufgeteilt wird und die beiden Teillichtwege vor dem Auftreffen auf einem Detektor derartig zusammengeführt werden, daß sie miteinander interferieren. Zu diesem Zweck umfaßt die InterferometerAnordnung üblicherweise außer der kurzkohärenten Lichtquelle (mindestens) einen Strahlteiler, einen Referenzreflektor und den Detektor. Die Lichtwege zwischen diesen Elementen bilden Interferometerarme. Das Primärlicht gelangt von der Lichtquelle durch einen Lichtquellenarm zu dem Strahlteiler und wird dort aufgeteilt. Ein erster Anteil des Primärlichts wird als Meßlicht über einen Objektarm in Abtastrichtung auf das Objekt gestrahlt, während ein zweiter Anteil des Primärlichts als Referenzlicht über einen Reflektorarm zu dem Referenzreflektor gelangt. Beide Lichtanteile werden reflektiert (das Meßlicht an lichtremittierenden Stellen [light reflecting sites] des Untersuchungsobjektes, das Referenzlicht an dem Referenzreflektor) und nach der Reflexion als Sekundärlicht auf dem jeweils gleichen Lichtweg (Objektarm bzw. Referenzarm) zu dem Strahlteiler zurückgeführt. Dort werden die Sekundärlichtanteile zusammengefaßt und als Detektionslicht über einen Detektionsarm dem Detektor zugeführt. Gemäß einer bevorzugten Ausführungsform der vorliegenden Erfindung verläuft ein Teilabschnitt des Meßlichtweges und vorzugsweise auch ein Teilabschnitt des Referenzlichtweges innerhalb mindestens eines fluidgelagerten Lichttransportmoduls.

Bei der Abtastung wird die longitudinale Abtastposition (longitudinal scan position) in rascher Folge variiert. Dies geschieht üblicherweise durch Veränderung der Relation der Längen des Referenzlichtweges und des Meßlichtweges. Dadurch wird diejenige Position auf der Abtaststrecke verändert, für die die Voraussetzung für die Interferenz des Meßlichts und des Referenzlichts (nämlich, das sich die optische Weglänge beider Lichtwege maximal um die Kohärenzlänge des Lichtweges voneinander unterscheiden) erfüllt ist. Die aktuelle Abtastposition ist dabei jeweils diejenige Position auf der Abtaststrecke, für die die optische Länge des gesamten Meßlichtweges mit der optischen Länge des gesamten Referenzlichtweges in der jeweiligen Interferometeranordnung übereinstimmt ("Kohärenzbedingung"). In der Regel wird der Referenzspiegel in Richtung des Referenzstrahles verschoben und dadurch der Referenzlichtweg verkürzt oder verlängert.

Nähere Einzelheiten über unterschiedliche vorbekannte LCDS-Geräte und-Verfahren können der einschlägigen Literatur entnommen werden. Verwiesen sei insbesondere auf die WO 03/073041 und die darin zitierten weiteren Publikationen 1) bis 6). Die WO 03/073041 befaßt sich insbesondere mit einem speziellen LCDS-Verfahren, das eine extrem schnelle Longitudinal-Abtastung ermöglicht, die sich durch Verschieben eines Referenzspiegels nicht erreichen läßt: Auch im Rahmen der vorliegenden Erfindung wird vorzugsweise dieses spezielle Verfahren verwendet, jedoch sind auch andere vorbekannte Interferometer-Anordnungen in Verbindung mit der vorliegenden Erfindung verwendbar. Beispiele sind in der DE 19819762 und in den Publikationszitaten der WO 03/073041 beschrieben.

Als Fluid für die erfindungsgemäße Fluidlagerung des mindestens einen Lichttransportmoduls eignet sich eine Flüssigkeit.oder ein Gas. Bevorzugt erfolgt die Lagerung mittels eines Gases, insbesondere Luft. Nachfolgend wird ohne Beschränkung der Allgemeinheit auf Luft als für die Lagerung verwendetes Fluid Bezug genommen. Das Luftlager basiert darauf, daß die Luft mit Hilfe einer externen Druckluftquelle in einen Lagerspalt zwischen dem Lichttransportmodul und dem Lagerteil gedrückt wird. Er wird vorzugsweise einerseits von der Außenwand eines zylindrischen Lagerabschnittes des Lichttransportmoduls und andererseits von der Innenwand des Lagerteils, die dem Lagerabschnitt des Lichttransportmoduls zugewandt ist, begrenzt. Der Luftdruck muß so hoch sein, daß durch das zwischen den Lagerflächen gebildete Luftpolster eine Berührung der Lagerflächen unter den im Betrieb des Abtastsystem auftretenden Kräften verhindert wird.

Gemäß einer bevorzugten Ausführungsform schließt der Abtastsensor zwei Lichttransportelemente ein, die beide, vorzugsweise innerhalb eines gemeinsamen Lagerteils, fluidgelagert sind. Die Lagerung erfolgt dabei aber nicht notwendigerweise mittels eines einzigen Lagerspaltes. Vielmehr umfaßt die Erfindung auch Ausführungsformen, bei denen ein zweites Lichttransportmodul teleskopartig wenigstens teilweise in eine entsprechende Ausnehmung des ersten Lichttransportmoduls eindringt und dort in einem Lagerspalt zwischen beiden Lichttransportmodulen fluidgelagert ist. In diesem Fall erfolgt also die Fluidlagerung zumindest teilweise nicht direkt zwischen dem Lagerteil und dem Lichttransportmodul, sondern indirekt über das erste Lichttransportmodul.

Luftlager werden im Maschinenbau vor allem zum Lagern von Wellen, die sich mit extrem hohen Drehzahlen drehen; eingesetzt (vgl. z.B. DE 102 10 750 B4). Im Rahmen der vorliegenden Erfindung geht es nicht um vergleichbar hohe Drehzahlen. Auch auf die praktische Reibungsfreiheit von Luftlagern kommt es nicht primär an. Vielmehr macht sich die Erfindung die Eigenschaft eines Luftlagers (oder anderen Fluidlagers) zu Nutze, daß es mittels der gleichen Lagerelemente eine "echt" zweidimensionale uneingeschränkte axiale Beweglichkeit und Rotation mittels eines einzigen Lagers ermöglicht. Um diese beiden Bewegungsfreiheitsgrade mittels Wälzlagerung zu ermöglichen, müssen in der Praxis getrennte Axial- und Rotationslager eingesetzt werden. Ein Lager, das außer der Drehung einer (zylindrischen) Welle auch eine Längsverschiebung ermöglicht, wird im Maschinenbau auch als "Loslager" bezeichnet.

Im Rahmen der Erfindung wird ein solches Lager mit einem Rotations-Translations-Antrieb kombiniert, der das fluidgelagerte Lichttransportmodul sowohl rotierend als auch in axialer Richtung bewegen kann. Bevorzugt ist der Rotations-Translations-Antrieb fest mit dem Lagerteil verbunden. Grundsätzlich sind unterschiedliche Antriebskonzepte, beispielsweise (berührungslos arbeitende) elektromagnetische Antriebe verwendbar. Bevorzugt ist ein Antrieb mittels Transportelementen, die in dem Lagerabschnitt intermittierend gegen dessen Wand gedrückt werden und dabei schrittweise Bewegungen tangential zu der Wandoberfläche derartig ausführen, daß das Lichttransportmodul in die gewünschte Richtung bewegt wird. Besonders bevorzugt ist ein Antrieb, bei dem die Transportelemente piezoelektrisch bewegt werden.

Piezoelektrische Antriebe, die auch als "Piezomotor" bezeichnet werden, haben mindestens ein Bein ("Leg"), das aus einer Vielzahl übereinander gestapelter piezokeramischer Schichten besteht, zwischen denen sich jeweils ein leitendes Material befindet. Mittels eines kontrollierten elektrischen Feldes können die Beine in synchrone Bewegungen ersetzt werden, durch die eine schrittweise Fortbewegung einer benachbarten Fläche bewirkt werden kann. Obwohl die Länge der einzelnen Schritte typischerweise einige wenige µm beträgt, können mit Frequenzen von mehreren 10.000 Schritten/sec Geschwindigkeiten von mehreren cm/sec erreicht werden. Derartige Piezomotoren werden beispielsweise von der Piezomotor Uppsala AB, Schweden, hergestellt.

Ein piezoelektrischer Stellantrieb, der in angepaßter Form auch für die vorliegende Erfindung anwendbar ist, wird in der DE 19961684 A1 beschrieben. Dabei werden sogenannte "Coupled-Resonance-Piezomotoren (CRP)" eingesetzt. Die Piezomotoren werden in Betriebsarten betrieben, welche auch im Rahmen der vorliegenden Erfindung wie folgt verwendet werden können:
- In einer ersten Betriebsart erfolgt die Kraftübertragung in tangentialer Richtung, die die gewünschte axiale und/oder rotierende Bewegung des Lichttransportmoduls antreibt.
- In einer zweiten Betriebsart werden die Transportelemente (Beine) des Piezomotors in Longitudinal-Schwingungen versetzt, durch die die Reibung zwischen den Transportelementen und dem Lagerabschnitt des Lichttransportmoduls minimiert wird. Dieser Betriebszustand wird verwendet, wenn eine Bewegung des Lichttransportmoduls, die durch einen anderen Piezomotor angetrieben wird, möglichst wenig behindert werden soll.
- In einem dritten Betriebszustand ist die piezo-elektrische Erregung der Transportelemente abgeschaltet. In diesem Zustand verhindert die Reibung zwischen den Transportelementen und der Außenwand des Lagerabschnittes, daß sich die Position des Lichttransportmoduls ungewollt ändert. Der Antrieb ist also selbstarretierend.

In der DE 19961684 A1 wird erläutert, daß piezoelektrische Stellantriebe eine kontinuierliche und gut steuerbare Drehbewegung ermöglichen und sehr wartungsarm sind. Als nachteilig wird hingegen angesehen, daß sie eine gewisse Anpreßkraft erfordern, weil die für die Bewegung erforderliche Kraft durch Reibung zwischen den Transportelementen und dem zu bewegenden Objekt übertragen wird. Im Rahmen der Erfindung wurde jedoch festgestellt, daß ein solcher Antrieb in Kombination mit der Fluidlagerung sehr gut für ein erfindungsgemäßes optisches Abtastsystem geeignet ist.

Durch die Erfindung werden unter anderem folgende Vorteile erzielt:
- Die Abtastung einer Fläche kann mit sehr viel höherer Geschwindigkeit als mit mechanischen Tastern erfolgen.
- Die Oberfläche wird nicht berührt und kann deshalb nicht beschädigt werden.
- Auch wenn die Oberfläche des Objektes verformbar (elastisch) ist, wird dadurch die Meßgenauigkeit nicht negativ beeinflußt.
- Da der optische Detektionsspot durch Fokussierung extrem klein sein kann, können entsprechend kleine lokale Veränderungen (z.B. Vertiefungen) noch abgetastet werden, deren Abtastung mit den üblichen mechanischen Tastern nicht möglich ist.
- Zwar sind mechanische Taster mit sehr kleiner Meßspitze verfügbar, die auch sehr feine Strukturen und Oberflächenrauhigkeiten abtasten können. Dies muß jedoch sehr langsam erfolgen, während die Abtastung mit einem erfindungsgemäßen System bei vergleichbarer Auflösung sehr viel schneller durchgeführt werden kann.

Die Erfindung wird nachfolgend anhand von in den Figuren dargestellten Ausführungsbeispielen näher erläutert. Die dargestellten und beschriebenen Besonderheiten können einzeln oder in Kombination verwendet werden, um bevorzugte Ausgestaltungen der Erfindung zu schaffen. Es zeigen:
- Fig. 1: eine stark schematisierte Seitenansicht eines Abtastsensors für ein erfindungsgemäßes Abtastsystem;
- Fig. 2: eine stark schematisierte Seitenansicht, teilweise als Blockdiagramm, eines erfindungsgemäßen Abtastsystems mit einer zweiten Ausführungsform eines Abtastsensors;
- Fig. 3: eine stark schematisierte Seitenansicht einer dritten Ausführungsform eines Abtastsensors;
- Fig. 4: eine stark schematisierte Seitenansicht einer vierten Ausführungsform eines Abtastsensors;
- Fig. 5 bis Fig. 7: schematische Seitenansichten von drei unterschiedlichen Lichtaustrittsoptik-Modulen.

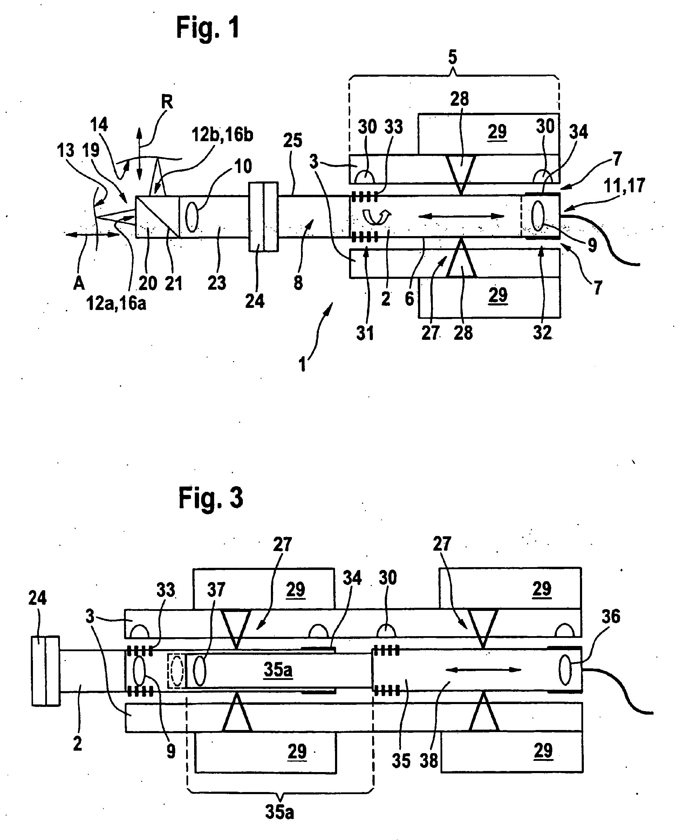

Der in Figur 1 dargestellte Abtastsensor 1 weist ein langgestrecktes Lichttransportmodul 2 auf, das mittels eines Lagerteils 3 luftgelagert ist. Das Lichttransportmodul 2 ist mindestens in einem Lagerabschnitt 5 von einer zylindrischen Außenwand 6 umgeben, die wiederum von dem Lagerteil 3 derartig umschlossen ist, daß dazwischen ein Lagerspalt 7 vorhanden ist, in den von einer nicht dargestellten Druckluftquelle Luft gedrückt wird. Selbstverständlich muß die Gestaltung des Lagerabschnitts 5 und des Lagerteils 3 sowie der Druck der in den Lagerspalt 7 gedrückten Luft derartig aufeinander abgestimmt sein, daß das Lichttransportmodul 2 innerhalb des gesamten gewünschten Bewegungsbereiches und unter Berücksichtigung der im Betrieb vorkommenen Belastungen berührungsfrei gelagert ist. Grundsätzlich ist es ausreichend, wenn das Lichttransportmodul 2 einen oder mehrere zylindrische Lagerabschnitte mit relativ kurzer Ausdehnung in axialer Richtung hat, soweit deren Abmessungen ausreichen, um die gewünschte axiale Beweglichkeit zu gewährleisten. Bevorzugt ist jedoch zumindest diejenige Teillänge des Lichttransportmoduls 2, die sich im Betrieb des Abtastsensors zumindest zeitweise innerhalb des Lagerteils 3 befindet, zylindrisch ausgebildet.

Das Lichttransportmodul 2 enthält in seinem Innenraum 8 ein aus Elementen der Freistrahloptik, insbesondere Linsen 9,10 bestehendes optisches System, durch das Primärlicht von einer Lichteintrittsstelle 11 zu einer axial von dieser entfernten Lichtaustrittsstelle 12 transportiert wird, wobei im vorliegenden Fall zwei Lichtaustrittsstellen 12a und 12b vorgesehen sind, von denen das Primärlicht einerseits in axialer Richtung und andererseits in radialer Richtung auf eine Objektoberfläche 13,14 abgestrahlt wird. Von der Objektoberfläche 13 bzw. 14 reflektiertes Sekundärlicht tritt an einer im vorliegenden Fall mit der jeweiligen Lichtaustrittsstelle 12a,12b übereinstimmende Sekundärlicht-Eintrittsstelle 16a,16b wieder in den langgestreckten Lichttransportmodul 2 ein und wird durch das in dessen Innenraum 8 vorhandene optische System zu einer Sekundärlicht-Austrittsstelle 17 geleitet, die im dargestellten Fall mit der Primärlicht-Eintrittsstelle 11 übereinstimmt.

Zum Abstrahlen des Pimärlichts dient eine Lichtaustrittsoptik 19, die im dargestellten Fall ein Prisma 20 mit einer vorzugsweise wellenlängenabhängigen Strahlteilerschicht 21 einschließt. Durch die Strahlteilerschicht 21 wird das Licht in die Raumrichtungen axial (Lichtaustrittsstelle 12a) und radial (Lichtaustrittsstelle 12b) aufgeteilt, um einerseits eine in axialer Richtung vor dem Lichttransportmodul 2 befindliche Objektfläche 13 und andererseits eine in radialer Richtung seitlich von dem Lichttransportmodul 2 befindliche Objektfläche 14 abtasten zu können.

Selbstverständlich kann es zweckmäßig sein, in bestimmten Anwendungsfällen nur eine dieser Möglichkeiten zu nutzen und dann den Strahlteiler 21 wegzulassen (Axialabtastung) oder durch eine möglichst vollständig spiegelnde Fläche zu ersetzen (Radialabtastung). Vorzugsweise ermöglicht jedoch der Abtastsensor 1 gleichzeitig beide Abtastrichtungen, wobei die Lichtanteile in bekannter Weise getrennt werden können. Im dargestellten Fall erfolgt die Trennung mittels der wellenlängenabhängigen Strahlteilerschicht in Verbindung mit unterschiedlichen Primärlichtwellenlängen für die Radial- und die Axialabtastung.

Bei der dargestellten bevorzugten Ausführungsform ist die Lichtaustrittsoptik 19 nicht einstückig (integral) mit dem übrigen Lichttransportmodul 2 ausgebildet, sondern Bestandteil eines Austrittsoptikmoduls 23, welches mittels einer Kupplung 24 auswechselbar mit einem Abtastmodulbasisteil 25 verbunden werden kann, das insbesondere den Lagerabschnitt 5 umfaßt und bevorzugt alle übrigen Teile des Lichttransportmoduls enthält.

Das Lichttransportmodul 2 ist in dem Lagerteil 3 mittels eines Rotations-Translations-Antriebs 27 sowohl in axialer Richtung als auch rotierend antreibbar, wobei der Antrieb vorzugsweise an dem Lagerteil 3 befestigt ist und auf den Antriebsrotor 2 einwirkt.

Wie erläutert, wird vorzugsweise ein Antrieb verwendet, der mittels in den Figuren symbolisch dargestellter Transportelemente 28 in dem Lagerabschnitt 5 intermittierend gegen dessen Wand 8 drückt, wobei die Transportelemente 28 schrittweise Bewegungen tangential zu der Wandoberfläche derartig ausführen, daß das Lichttransportmodul 2 in die gewünschte Richtung bewegt wird. Die Transportelemente 28 werden vorzugsweise piezoelektrisch mittels einer Piezoantriebselektronik 29 bewegt.

Vorzugsweise sind für die axiale Bewegung und für die rotierende Bewegung getrennte Transportelemente 28 vorgesehen, welche Tangentialbewegungen in die entsprechenden Raumrichtungen (in Achsrichtung bzw. quer dazu) durchführen, wenn die entsprechende axiale bzw. rotierende Bewegung gewünscht wird. Bevorzugt befinden sich während einer Rotationsbewegung die axial wirkenden Transportelemente in einem Betriebszustand (beispielsweise der weiter oben erläuterten zweiten Betriebsart), in dem die Rotationsbewegung möglichst wenig behindert wird. Im Falle einer axialen Bewegung ist es selbstverständlich umgekehrt, d.h. die für die Rotation zuständigen Transportelemente 28 befinden sich in einem die axiale Bewegung möglichst wenig behindernden Betriebszustand.

Gemäß einer weiteren bevorzugten Ausführungsform ist vorgesehen, daß die Transportelemente 28 an dem den Lagerabschnitt 5 umgebenden Lagerteil 3 so verteilt angeordnet sind, daß sich die von ihnen ausgeübten Kräfte auf die Wand 6 im wesentlichen gegenseitig aufheben. Jedenfalls sollten sich deren Kraftwirkungen dergestalt kompensieren, daß durch den Druck der Transportelemente 28 keine Radialbewegung des Lagerabschnittes 5 und damit des Lichttransportmoduls 2 verursacht wird, der die Abtastung stört ("Kompensationsbedingung"). Im einfachsten Fall sind deshalb die Transportelemente paarweise derartig angeordnet, daß sie von einander gegenüberliegenden Umfangspositionen, aber in gleicher Axialposition, gegen die Wand 8 des Lagerabschnitts 5 des Lichttransportmoduls 2 drücken. Alternative Ausgestaltungen sind möglich, beispielsweise mit drei, vier oder mehr auf dem Umfang gleichmäßig (d.h. in Winkelabständen von 120°, 90°...) verteilten Transportelemente. Es können aber auch über die Länge des Abtastabschnittes mehrere in gleiche oder in unterschiedliche Richtungen wirkende Transportelemente (jeweils ausgehend von dem Lagerteil 3) auf die Außenwand 6 in dem Lagerabschnitt 5 einwirken, wobei vorzugsweise stets die oben genannte Kompensationsbedingung eingehalten werden soll. Durch die Einhaltung der Kompensationsbedingung wird nicht nur eine Beeinträchtigung der optischen Messung durch Fehlpositionierung des Lichttransportmoduls vermieden, sondern auch eine verbesserte Effektivität der Transportelemente mit relativ geringer Andruckkraft erreicht.

Um zu jedem Zeitpunkt eine präzise Information sowohl über die Axialposition als auch über die Drehwinkelposition des Lichttransportmoduls 2 sicherzustellen, ist ein Axialpositionssensor 31 und ein Drehpositionssensor 32 vorgesehen, wobei jeder der Sensoren 31,32 mit einer Ortsmarkierung 33 bzw. 34 arbeitet, die an dem Lichttransportmodul 2 angebracht ist. Geeignete Orts- und Drehwinkelsensoren sind in zahlreichen Ausführungsformen bekannt. Im Rahmen der Erfindung eignen sich insbesondere optische Orts- und Drehwinkelsensoren, bei denen die Ortsmarkierung aus einer Serie von in engem Abstand angeordneten (in der Regel periodischen) Marken, beispielsweise sehr feinen Strichen oder Ritzen besteht. Diese werden mittels eines an dem Lagerteil befestigten lichtoptischen Detektors 30 detektiert und die resultierenden Signalfolgen werden mittels eines Prozessors zu der gewünschten Ortsinformation verarbeitet. Da diese Verfahren bekannt sind, ist eine nähere Erläuterung nicht erforderlich:
Der Anwendungsbereich des in Figur 1 dargestellten Abtastsensors 1 ist in zweierlei Hinsicht eingeschränkt:
   - Einerseits ist eine rotierende Bewegung des Lichttransportmoduls 2 nur insoweit möglich, wie die Mittel, mit denen das Primärlicht der Lichteintrittsstelle 11 zugeführt und das Sekundärlicht von der Lichtaustrittsstelle 17 weggeführt wird, einer solchen Rotation folgen können. Da diese Mittel vorzugsweise aus Lichtleitfasern bestehen, ist eine Rotation nur eingeschränkt möglich.
   - Zum zweiten ist die Fokussierung fest vorgegeben, so daß sowohl in axialer als auch in radialer Richtung die Abtastung in Strahlrichtung (Longitudinal Scan, symbolisiert durch die Pfeile A und R) nur in einem engen den Fokuspunkt umgebenden Tiefenschärfenbereich möglich ist. Hinsichtlich der Axialabtastung ist dieses Problem weniger schwerwiegend, weil ein Longitudinal Scan in der A-Richtung durch axiales Verschieben des Lichttransportmoduls bewirkt werden kann. Ein Longitudinal Scan in der R-Richtung würde jedoch bedingen, daß der gesamte Abtastsensor 1 entsprechend seitwärts bewegt wird. Dies widerspricht der Anforderung an eine sehr schnelle Abtastung, bei der möglichst wenig Gerätemasse bewegt werden soll.

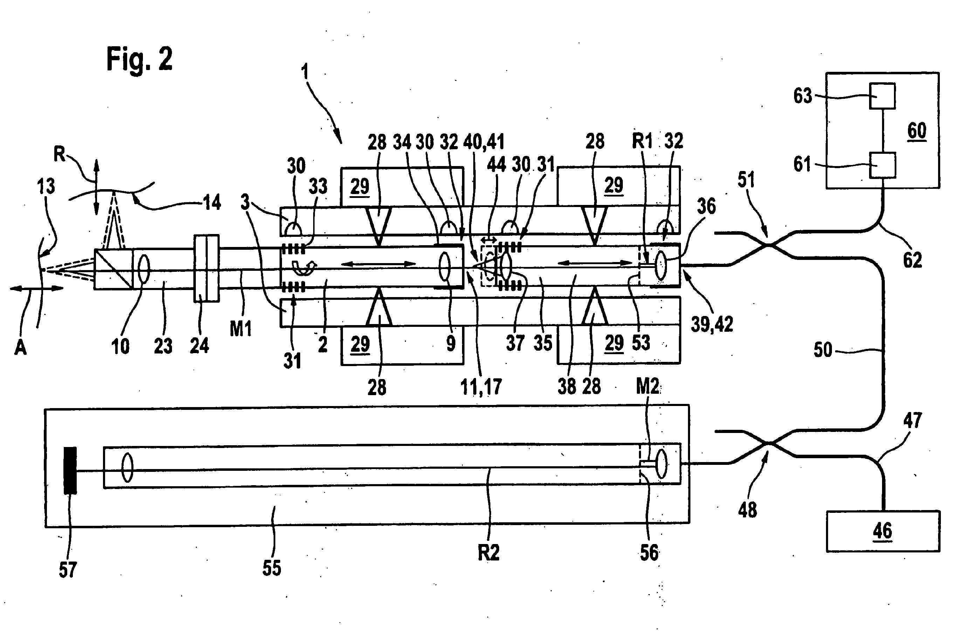

Dieses Problem wird durch die in Figur 2 dargestellte Ausgestaltung gelöst, bei der gleiche oder sich entsprechende Bauteile mit den gleichen Bezugszeichen wie bei Figur 1 bezeichnet sind. Eine Besonderheit des Abtastsensors 1 von Figur 2 im Vergleich zu Figur 1 besteht darin, daß er ein weiteres fluidgelagertes Lichttransportmodul aufweist, das als Longitudinalabtastmodul 35 bezeichnet wird. Es ist präzise koaxial zu dem Lichttransportmodul 2 derartig geführt ist, daß es in der gleichen axialen Richtung beweglich ist. Es enthält optische Elemente, wie beispielsweise Linsen 36 und 37, durch die das Primärlicht von einer Primärlicht-Eintrittsstelle 39 durch den Innenraum 38 des Longitudinalabtastmoduls 35 zu einer in axialer Richtung entfernten Primärlicht-Austrittsstelle 40 des Longitudinalabtastmoduls 35 transportiert wird, von der es zu der Primärlicht-Eintrittsstelle 11 des ersten Lichttransportmoduls 2 weitergeleitet wird. Außerdem wird durch den Innenraum 38 des Longitudinalabtastmoduls 35 auch Sekundärlicht transportiert, welches von der Primärlicht-Austrittsstelle 17 des ersten Lichttransportmoduls 2 über eine vorzugsweise mit der Primärlicht-Austrittsstelle 40 des Longitudinalabtastmoduls 35 übereinstimmende Sekundärlicht-Eintrittsstelle 41 in den Innenraum 38 gelangt und in diesem zu einer in axialer Richtung entfernten Sekundärlicht-Austrittsstelle 42 des Longitudinal-Abtastmoduls 35 transportiert wird, wobei diese wiederum vorzugsweise mit der Primärlicht-Eintrittsstelle 39 übereinstimmt.

Das Longitudinalabtastmodul 35 ist vorzugsweise gemeinsam mit dem ersten Lichttransportmodul 2.gelagert, d.h. der Lagerabschnitt des Lichttransportmoduls 2 und der LongitudinalAbtastmoduls 35 (jedenfalls mindestens ein Teilabschnitt von dessen Länge [Lagerabschnitt]) sind, wie in Figur 2 dargestellt, von einem gemeinsamen Lagerteil umgeben und dadurch präzise koaxial (insbesondere in einem gemeinsamen zylindrischen Rohr) geführt.

Die zum Abtasten erforderlichen Bewegungen des Longitudinalabtastmoduls 35 werden ebenso wie die Bewegungen des ersten Lichttransportmoduls 2 vorzugsweise von Transportelementen 28 angetrieben, die intermettierend gegen dessen Wand gedrückt werden und dabei schrittweise Bewegungen tangential zu der Wandoberfläche derartig ausführen, daß das Longitudinalabtastmodul in die gewünschte Richtung bewegt wird. Auch hinsichtlich bevorzugter Ausgestaltungen gilt entsprechend das gleiche wie bei dem ersten Lichttransportmodul, d.h.
- Transportelemente werden piezoelektrisch bewegt
- ihre Anordnung folgt der oben erläuterten Kompensationsbedingung
- die Axialposition und die Rotationsposition kann mittels eines Axialpositionssensors 31 und eines Drehpositionssensors 32 (mit den oben erläuterten Merkmalen) jederzeit präzise detektiert werden

Im Betrieb erfolgt vorzugsweise eine rotierende und (gewünschtenfalls) axiale Abtastung mittels des Lichttransportmoduls 2 und die Longitudinalabtastung mittels des Longitudinalabtastmoduls 35:
- Die Rotation des Lichttransportmoduls 2 wird nicht durch eine angeschlossene Lichtleitfaser eingeschränkt, weil das Ein- und Auskoppeln des Primär- bzw. Sekundärlichts freistrahloptisch erfolgt. Demzufolge ist beispielsweise eine konstante Rotation des Lichttränsportmoduls 2 in eine Drehrichtung möglich. Verbunden mit einer gleichzeitigen langsamen Änderung der Axialposition des Lichttransportmoduls 2 ergibt sich eine helixförmige Abtastung, die für viele Anwendungsfälle vorteilhaft ist. Generell erlaubt die hier beschriebene Ausführungsform eine sehr schnelle und präzise Abtastung von Oberflächen, die das erste Lichttransportmodul 2 rotationssymmetrisch umgeben, wie beispielsweise Bohrungen von Maschinenteilen.
- Durch Verschiebung des Longitudinalabtastmoduls 35 in axialer Richtung (angedeutet durch den Doppelpfeil 44) wird die jeweilige Abtastposition in Strahlrichtung entsprechend den Pfeilen A und R entsprechend variiert. Hinsichtlich der axialen Longitudinalabtastung A ist dies zwar auch mit einem einfachen Lichttransportmodul gemäß Figur 1 möglich, jedoch ist die Verwendung eines gesonderten Longitudinalabtastmoduls vorteilhaft, weil eine sehr viel kleinere Masse bewegt werden muß. Hinsichtlich der Longitudinalabtastung in radialer Richtung R ist bei der Anordnung gemäß Figur 2 ein erheblich weiterer Abtastbereich möglich, weil der Fokuspunkt entsprechend der Änderung der Position des Longitudinalabtastmoduls 35 in Richtung des Doppelpfeiles R variiert wird. Die Radialabtastung ist somit nur durch Begrenzungen beschränkt, die sich aus den optischen Randbedingungen des freistrahloptischen Systems in dem Lichttransportmodul 2 und in dem Longitudinalabtastmodul 35 ergeben. Unter Berücksichtigung dieser Beschränkungen können Longitudinalabtaststrecken von mindestens 5 mm realisiert werden.

In Figur 2 sind schematisch die weiteren notwendigen Bestandteile eines bevorzugten optischen Abtastsystems dargestellt, das neben dem Abtastsensor 1 weitere Bestandteile eines Kurzkohärenz-Interferometers 45 umfaßt. Hierzu gehört eine Lichtquelle 46, von der Primärlicht über einen mittels Lichtleitfaser realisierten Lichtquellenarm 47 zu einem ersten optischen Koppler 48 transportiert wird. Von dort gelangt ein Teil des Primärlichts über eine Verbindungsstrecke 50 und einen zweiten optischen Koppler 51 zu der Primärlicht-Eintrittsstelle 39 des Longitudinalabtastmoduls 35.

Eine Besonderheit der dargestellten Interferometeranordnung besteht darin, daß eine mit R1 bezeichnete Teilstrecke des Referenzlichtweges in einem fluidgelagerten Lichttransportmodul (bei Figur 2 in dem Longitudinalabtastmodul 35 und bei Figur 1 in dem Lichttransportmodul 2) verläuft. Es handelt sich dabei um die Teilstrecke zwischen der Primärlicht-Eintrittsstelle 39 (Figur 2) bzw. 11 (Figur 1) und einer als Referenzreflektor 53 dienenden Strahlteilerplatte, welche einen Teil des Lichts reflektiert und den übrigen Teil auf den Meßlichtweg M1 durch mindestens ein fluidgelagertes Lichttransportmodul des Abtastsensors 1 bis zu der Objektoberfläche 13 bzw. 14 gelangt.

Der große Weglängenunterschied zwischen den Strecken M1 und R1 wird mittels eines Weglängenausgleichsmoduls 55 ausgeglichen, der eine Strahlteilerplatte 56 und einen Reflektor 57 enthält. Der Abstand zwischen der Strahlenteilerplatte 56 und dem Reflektor 57 ist dabei so bemessen, daß der optische Weglängenunterschied zwischen R1 und M1 durch einen entsprechenden optischen Weglängenunterschied zwischen den in dem Weglängenausgleichsmodul 55 verlaufenden Teilstrecken M2 und R2 ausgeglichen wird.

Mittels der optischen Koppler 48 und 51 wird das von der Lichtquelle 46 ausgehende Primärlicht sowohl in den Abtastsensor 1 als auch in den Weglängenausgleichsmodul 55 eingekoppelt. Dort verlaufen Teile des Lichts bis zu den Strahlteilerplatten 53 bzw. 56 und werden dort reflektiert. Andere Lichtanteile gelangen in dem Abtastsensor 1 bis zu der abzutastenden Oberfläche 13 bzw. 14 und werden dort reflektiert bzw. gelangen in dem Weglängenausgleichsmodul 55 bis zu dem Reflektor 57, von dem sie reflektiert werden. Das reflektierte Licht läuft als Sekundärlicht zurück, wobei ein Anteil mittels der optischen Koppler 48 und 51 über einen Detektionsweg zu einer Detektionseinheit 60 gelangt.

Selbstverständlich können alle diese Lichtanteile auf den beschriebenen Lichttransportwegen unabhängig propagieren. Die Detektionseinheit 60 ist jedoch so ausgebildet, daß sie nur dann ein Interferenzsignal erzeugt, wenn auf sie auftreffendes einerseits von dem Referenzreflektor reflektiertes Referenzlicht und andererseits von der abzutastenden Oberfläche reflektiertes Meßlicht in einer interferenzfähigen Phasenbeziehung auf den Detektor auftreffen. Damit werden von der Detektionseinheit 60 nur solche Lichtanteile ausgewertet, die der jeweils eingestellten Longitudinalabtastposition entsprechen. Wie einleitend erläutert wurde, erfolgt die Variation der Abtastposition im Rahmen der Erfindung nicht mittels eines beweglichen Referenzspiegels, sondern mit einem ortsfesten Referenzspiegel in Kombination mit einer gemäß der WO 03/073041 ausgebildeten Detektionseinheit 60, welche eine hier nur symbolisch dargestellte Wellenlängenselektionseinrichtung 61 umfaßt. Sie ermöglicht die in der WO 03/073041 näher erläuterte und weiter oben kurz zusammengefaßte Funktion. Dieses Dokument enthält zahlreiche weitere Erläuterungen und Gestaltungshinweise, insbesondere auch hinsichtlich anderer Möglichkeiten, im Rahmen eines LCDS-Verfahren die Longitudinalabtastung, d.h. die Variation der jeweiligen Abtastposition in Strahlrichtung (Longitudene Scan Position) zu bewirken.

Figur 3 zeigt eine weitere Ausführungsform eines Abtastsensors mit zwei fluidgelagerten Lichttransportmodulen, nämlich einem Lichttransportmodul 2 und einem Longitudinalabtastmodul 35. Eine Besonderheit besteht darin, daß das Longitudinalabtastmodul 35 mit einem Eintauchabschnitt 35a in eine entsprechende Ausnehmung des ersten Lichttransportmoduls 2 eindringt. Dies ermöglicht eine günstigere Positionierung der benachbarten optischen Elemente (Linsen) 37 bzw. 9 der beiden fluidgelagerten Lichttransportmodule 2, 35. Dadurch ist eine effektivere Signalübertragung möglich.

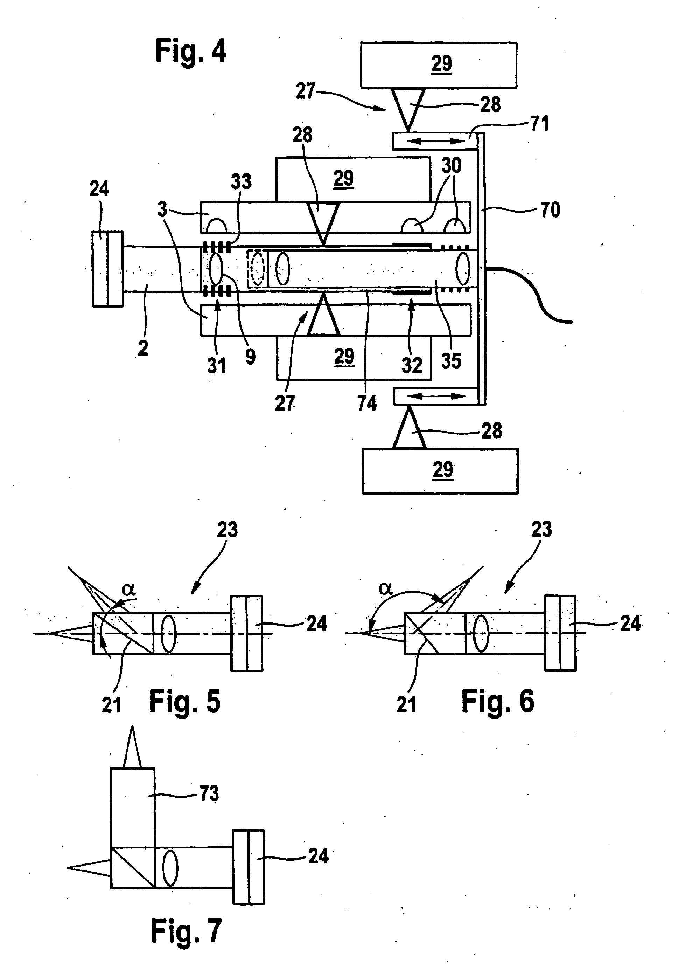

Die in Figur 4 dargestellte alternative Ausführungsform zeichnet sich durch eine besonders kompakte Bauweise in axialer Richtung aus, die für bestimmte Anwendungen vorteilhaft ist, bei denen der Abtastsensor eine maximale Länge in axialer Richtung nicht überschreiten soll. Um diese kompakte Bauweise zu ermöglichen, ist in diesem Fall das Longitudinalabtastmodul 35 über einen Flansch 70 mit Antriebselementen 71 verbunden, die sich von dem Flansch 70 nach vorne (also in Richtung zu der Lichtaustrittsoptik) erstrecken. Die Transportelemente 28 wirken mittels einer Piezoantriebselektronik 29 auf die Antriebselemente 71. Dies ist vorteilhaft, wenn - wie hier dargestellt - das Longitudinalabtastmodul 35 so weitgehend in den Lichttransportmodul 2 eindringt, daß keine ausreichende Teillänge seiner Außenwand mehr für die Transportelemente 28 des Piezoantriebs zugänglich ist. Unterschiedliche Ausgestaltungen sind möglich, wobei die kompakte Bauweise dadurch erreicht wird, daß Antriebselemente verwendet werden, auf die die Transportelemente des Rotations-Translations-Antriebs 27 einwirken und die in axialer Richtung vor dem hinteren (von der Lichtaustrittsoptik) abgewandten Ende des Longitudinalabtastmoduls 35 verlaufen.

Eine weitere Besonderheit der in Figur 4 dargestellten Ausführungsform besteht darin, daß das Longitudinalabtastmodul 35 in einem Lagerspalt 74 gelagert ist, der zwischen seiner Außenwand und der entsprechenden Innenwand der Ausnehmung des ersten Lichttransportmoduls 2 ausgebildet ist, in die das Longitudinalabtastmodul 35 teleskopartig eindringt. Das Longitudinalabtastmodul 35 ist somit nicht unmittelbar, sondern mittelbar (über das Lichttransportmodul 2) innerhalb des Lagerteils 3 gelagert. Außerdem wird in diesem Fall durch die Antriebselemente 71 eine Rotation des Longitudinalabtastmoduls 35 verhindert. Es ist demzufolge rotationsfest gelagert. Deshalb ist bei der Ausführungsform nach Figur 4 für die Kontrolle der Rotationsposition des Longitudinalabtastmoduls 35 kein Drehpositionssensor erforderlich.

Die Figuren 5 bis 7 zeigen drei unterschiedliche Varianten von Austrittsoptikmodulen, die für die Erfindung geeignet sind:
- Bei den Figuren 5 und 6 verläuft die Strahlteilerschicht im Vergleich zu Figur 1 unter einem anderen Winkel derartig, daß die Radialabtastung unter einem Winkel α von 45° bzw. 135° erfolgt. Selbstverständlich sind weitere Varianten möglich. Die Beispiele zeigen, daß der Winkel der Longitudinal-Abtastrichtung in weiten Bereichen variiert werden kann.
- Bei der in Figur 7 dargestellten Ausgestaltung wird ein Verlängerungsteil 73 verwendet, durch das die Abtastoptik besser auf die Abtastung von rotationssymmetrischen Flächen mit relativ großem Durchmesser angepaßt wird.

Obwohl die Lichttransportmodule aufgrund ihrer Fluidlagerung sowohl axial als auch rotierend beweglich sind, muß diese Möglichkeit nicht in jedem Anwendungsfall genutzt werden. Die Erfindung erstreckt sich vielmehr auch auf Abtastsysteme, bei denen einer der Bewegungsfreiheitsgrade nicht benötigt wird und deswegen das erste (die Lichtaustrittsoptik tragende) Lichttransportmodul entweder nur axial oder nur rotierend bewegt wird. Auch in diesen Fällen ist jedoch ein Translations-Rotations-Antrieb vorhanden, der die Bewegung hinsichtlich beider Freiheitsgrade ermöglicht und es sind vorzugsweise auch Positionssensoren zur präzisen Kontrolle der Axial- und Drehposition vorhanden.

In der vorstehenden Beschreibung wurde hinsichtlich des Rotations-Translations-Antriebs 27 und der entsprechenden Bewegungen der Lichttransportmodule 2,35 auf axiale und (quer zu der Achsrichtung) rotierende Bewegungen Bezug genommen. Eine Trennung in axiale und rotierende Bewegungskoordinaten ist in vielen Fällen zweckmäßig, jedoch nicht unbedingt erforderlich. Insbesondere können auch Transportelemente 28 eingesetzt werden, die nicht für eine bestimmte (axiale oder rotierende) Bewegung spezialisiert sind, sondern elektrisch in beliebige Raumrichtungen angesteuert werden können. Die Erfindung umfaßt selbstverständlich auch Rotations-Translations-Antriebe dieser oder ähnlicher Bauart, wobei die von diesen angetriebenen Bewegungen nicht auf "axial" und "rotierend" beschränkt sind, sondern auch in jedem beliebigen anderen Winkel verlaufen können, so daß wendelförmige Bewegungen der Lichttransportmodule entstehen.

Soweit in der vorstehenden Beschreibung auf "Teile" Bezug genommen wird, bezieht sich dies auf Funktionseinheiten. Es bedeutet selbstverständlich nicht, daß diese "Teile" einstückig sein müssen. Insbesondere kann auch das Lagerteil 3 aus mehreren Einzelteilen, beispielsweise zwei Halbschalen, zusammengesetzt sein.

## Patentansprüche

1. Abtastsystem zum Abtasten der Oberfläche (13,14) eines Objektes, insbesondere für eine Koordinaten-Meßmaschine, oder einen Positionsroboter, wobei
das Abtastsystem einen Abtastsensor (1) mit mindestens einem fluidgelagerten Lichttransportmodul (2) einschließt, wobei das Lichttransportmodul (2) von einem ebenfalls zum Abtastsensor gehörigen Lagerteil (3) umschlossen ist und sich zwischen der Außenwand (6) des Lichttransportmoduls (2) und dem Lagerteil (3) in einem Lagerspalt (7) ein Fluid befindet, mittels dessen das Lichttransportmodul (2) so gelagert ist, daß es hinsichtlich der Achse der zylindrischen Außenwand sowohl axial als auch rotierend beweglich ist,
durch den Innenraum (8) des Lichttransportmoduls (2) von einer Lichtquelle ausgehendes an einer Primärlicht-Eintrittsstelle (11) in den Lichttransportmodul eintretendes Primärlicht zu einer in axialer Richtung von der Primärlicht-Eintrittsstelle entfernten Primärlicht-Austrittsstelle (12a,12b) transportiert wird, von der es in Richtung auf die Objektoberfläche (13,14) abstrahlbar ist, und
durch den Innenraum (8) des Lichttransportmoduls (2) auch von der Objektoberfläche (13,14) reflektiertes Sekundärlicht, das an einer, vorzugsweise mit der Primärlicht-Austrittsstelle (12a,12b) übereinstimmenden, Sekundärlicht-Eintrittsstelle (16a,16b) in den Lichttransportmodul (2) eintritt, zu einer in axialer Richtung von der Sekundärlicht-Eintrittsstelle (16a,16b) entfernten, vorzugsweise mit der Primärlicht-Eintrittsstelle (11) übereinstimmenden, Sekundärllcht-Austrittsstelle (17) transportiert wird, und
das Lichttransportmodul mittels eines Rotations-Translations-Antriebs (27) sowohl in axialer Richtung als auch rotierend antreibbar ist.

2. Abtastsystem nach Anspruch 1, bei dem der Abtastsensor (1) zwei fluidgelagerte Lichttransportmodule (2,35) aufweist, wobei ein koaxial mit dem ersten Lichttransportmodul (2) geführtes zweites Lichttransportmodul als Longitudinalabtastmodul (35) dient, relativ zu dem ersten Lichttransportmodul in axialer Richtung beweglich ist und optische Elemente enthält, durch die das Primärlicht von einer Primärlicht-Eintrittsstelle (39) des Longitudinalabtastmoduls (35) zu einer in axialer Richtung entfernten Primärlicht-Austrittsstelle (40) transportiert wird, von der es in die Primärlicht-Eintrittsstelle (11) des ersten Lichttransportmoduls (2) weitergeleitet wird, und durch dessen Innenraum auch von der Primärlicht-Austrittsstelle (17) des ersten Lichttransportmoduls (2) austretendes Licht über eine, vorzugsweise mit der Primärlicht-Austrittsstelle (40) des Longitudinalabtastmoduls übereinstimmende, Sekundärlicht-Eintrittsstelle (41) in das Longitudinalabtastmodul (35) eintritt und zu einer in axialer Richtung von der Sekundärlicht-Eintrittsstelle (41) des Longitudinalabtastmoduls (35) entfernten, vorzugsweise mit dessen Primärlicht-Eintrittsstelle (39) übereinstimmenden Sekundärlicht-Austrittsstelle (42) des Longitudinalabtastmoduls (35) transportiert wird.

3. Abtastsystem nach Anspruch 2, bei dem das Longitudinalabtastmodul (35) gemeinsam mit dem ersten Lichttransportmodul (2) in einem gemeinsamen Lagerteil (3) fluidgelagert ist.

4. Abtastsystem nach einem der Ansprüche 1 bis 3,
das ein Kurzkohärenz-Interferometer (45) umfaßt, das so ausgebildet ist, dass
- das von der Lichtquelle (46) ausgehende Primärlicht mittels eines Strahlteilers (48,51) des Kurzkohärenz-Interferometers (45) auf zwei Lichtwege aufgeteilt wird,
- ein erster Teil des Primärlichts mittels des Kurzkohärenz-Inerferometers (45) als Meßlicht so auf das Objekt gestrahlt wird, dass es an einer lichtremittierenden Stelle, die sich an einer mittels des Kurzkohärenz-Interferometers (45) einstellbaren Abtastposition auf einer Abtaststrecke (R,A) befindet, reflektiert wird und ein zweiter Teil des Lichts als Referenzlicht auf einen Referenzreflektor (53) des Kurzkohärenz-Interferometers (45) gestrahlt und dort reflektiert wird,
- die einstellbare Abtastposition auf der Abtaststrecke (R,A) zur Durchführung einer Longitudinalabtastung längs der Abtaststrecke (R,A) mittels des Kurzkohärenz-Inerferometers (45) variiert wird und das reflektierte Sekundär-Meßlicht und Sekundär-Referenzlicht an einer Strahlzusammenführung (51) des Kurzkohärenz-Interferometers (45) so zusammengeführt werden, daß das resultierende Detektionslicht beim Auftreffen auf einen Detektor (63) ein Interferenzsignal erzeugt, das eine Information über die Stärke der Reflexion des Meßlichts in Abhängigkeit von der jeweils eingestellten Abtastposition enthält,
und eine Teilstrecke (M1) des Meßlichtweges innerhalb eines oder mehrerer fluidgelagerter Lichttransportmodulen (2,35) des Abtastsensors verläuft.

5. Abtastsystem nach Anspruch 4, bei dem in dem Lichtweg des Detektionslichts zwischen der Strahlzusammenführung (51) und dem Detektor (63) eine variable Wellenlängenselektionseinrichtung (61) des Kurzkohärenz-Interferometers (45) angeordnet ist, durch die das Detektionslicht in Abhängigkeit von seiner Wellenlänge derartig selektiert wird, daß zu dem Detektor selektiv bevorzugt Licht mit Wellenlängen gelangt, die einer vorbestimmten Folge von Wellenzahlen k entsprechen und zur Variation der Abtastposition längs der Abtaststrecke unterschiedliche Folgen der Wellenzahlen k einstellbar sind.

6. Abtastsystem nach einem der Ansprüche 4 oder 5, bei dem auch eine Teilstrecke (R1) des Referenzlichtweges in einem fluidgelagerten Lichttransportmodul (2,35) des Abtastsensors verläuft, diese Teilstrecke (R1) des Referenzlichtweges kleiner als die in einem oder mehreren fluidgelagerten Lichttransportmodulen des Abtastsensors (1) verlaufenden Teilstrecke (M1) des Meßlichtweges ist und das Abtastsystem zum Ausgleich der Differenz der Teilstrecken (R1,M1) ein von dem einen oder mehreren Lichttransportmodulen (2,35) des Abtastsensors (1) getrenntes Weglängenausgleichsmodul (55) aufweist.

7. Abtastsystem nach einem der vorhergehenden Ansprüche, bei dem das Primärlicht und das Sekundärlicht in dem mindestens einen fluidgelagerten Lichttransportmodul (2,35) mittels Freistrahloptik-Elementen geführt wird.

8. Abtastsystem nach einem der vorhergehenden Ansprüche, bei dem ein Lichttransportmodul (2) eine Lichtaustrittsoptik (19) aufweist, die so ausgebildet ist, daß das Primärlicht in axialer und/oder in radialer Richtung abgestrahlt werden kann.

9. Abtastsystem nach Anspruch 8, bei dem die Lichtaustrittsoptik (19) Bestandteil eines Austrittsoptikmoduls (23) ist, das auswechselbar mit einem fluidgelagerten Lichttransportmodul-Basisteil (25) verbunden werden kann.

10. Abtastsystem nach einem der vorhergehenden Ansprüche, bei dem das Fluid, mittels dessen das mindestens ein Lichttransportmodul (2,35) gelagert ist, ein Gas, insbesondere Luft, ist.

11. Abtastsystem nach einem der vorhergehenden Ansprüche, bei dem der Abtastsensor (1) einen Axialpositionssensor (31) und/oder einen Drehpositionssensor (32) zur Bestimmung der Axialposition und/oder Drehwinkelposition eines Lichttransportmoduls (2,35) einschließt, wobei an dem Lichttransportmodul (2,35) eine vorzugsweise periodische Ortsmarkierung (33,34) angebracht ist.

12. Abtastsystem nach einem der vorhergehenden Ansprüche, bei dem der Rotations-Translations-Antrieb (27) Transportelemente (28) aufweist, die intermittierend gegen eine Wand (8) eines Lichttransportmoduls (2,35) gedrückt werden und dabei schrittweise Bewegungen tangential zu der Wandoberfläche derartig ausführen, daß das Lichttransportmodul (2,35) in die gewünschte Richtung bewegt wird.

13. Abtastsystem nach Anspruch 12, bei dem die Transportelemente (28) piezoelektrisch bewegt werden.

14. Abtastsystem nach einem der Ansprüche 12 oder 13, bei dem mehrere Transportelemente (8) an dem Lagerteil (3) so verteilt angeordnet sind, daß der von ihnen ausgeübte Druck auf die Wand (6) des fluidgelagerten Lichttransportmoduls (2,35) dergestalt kompensiert wird, daß er keine störende Radialbewegung des fluidgelagerten Lichttransportmoduls (2,35) verursacht.

15. Abtastsystem nach einem der Ansprüche 12 bis 14, bei dem der Rotations-Translations-Antrieb getrennte Transportelemente einerseits für die axiale Bewegung und andererseits für die Rotation des mindestens einen fluidgelagerten Lichttransportmoduls (2,35) aufweist.

## Claims

1. Scanning system for scanning the surface (13, 14) of an object, in particular for a coordinates measurement machine, or for a position robot, wherein
the scanning system comprises a scan sensor (1) comprising at least one fluid-mounted light transport module (2), the light transport module (2) being enclosed by a bearing part (3), the bearing part also belonging to the scan sensor, and a fluid being provided in a bearing gap (7) between an external wall (6) of the light transport module and the bearing part (3), the light transport module (2) being mounted by means of the fluid in such a manner that it is movable both axially and also rotating with respect to the axis of the cylindrical external wall,
primary light originating from a light source and entering the light transport module at a primary light entry point (11) is transported through the interior (8) of the light transport module (2) to a primary light exit point (12a, 12b) distal from the primary light entry point in the axial direction, from which primary light exit point (12a, 12b) it can be emitted in the direction toward the object surface (13, 14), and
secondary light reflected from the object surface (13, 14), which enters the light transport module (2) at a secondary light entry point (16a, 16b), preferably coinciding with the primary light exit point (12a, 12b), is also transported through the interior (8) of the light transport module (2) to a secondary light exit point (17) distal in the axial direction from the secondary light entry point (16a, 16b) and preferably coinciding with the primary light entry point (11), and
the light transport module can be driven both in the axial direction and also rotating by means of a rotation-translation drive (27).

2. Scanning system according to Claim 1, wherein the scanning sensor (1) comprises two fluid-mounted light transport modules (2, 35), a second light transport module, guided coaxially with the first light transport module (2), serving as a longitudinal-scan module (35), being movable in relation to the first light transport module in the axial direction, and containing optical elements through which the primary light is transported from a primary light entry point (39) of the longitudinal-scan module (35) to a primary light exit point (40) distal in the axial direction, from which primary light exit point (40) it is further transported into the primary light entry point (11) of the first light transport module (2); and in that light exiting from the primary light exit point (17) of the first light transport module (2) enters the longitudinal-scan module (35) via a secondary light entry point (41) preferably coinciding with the primary light exit point (40) of the longitudinal-scan module and is also transported through its interior to a secondary light exit point (42) of the longitudinal-scan module (35), distal in the axial direction from the secondary light entry point (41) of the longitudinal-scan module (35) and preferably coinciding with its primary light entry point (39).

3. Scanning system according to Claim 2, wherein the longitudinal-scan module (35) is fluid-mounted together with the first light-transport module (2) in a shared bearing part (3).

4. Scanning system according to any one of Claims 1 to 3, comprising a low coherence interferometer (45), arranged and adapted in such a manner that
- the primary light originating from the light source (46) is divided into two light paths by means of a beam splitter (48, 51) of the low coherence interferometer (45),
- a first part of the primary light is radiated as measurement light by means of the low coherence interferometer (45) onto the object so that it is reflected at a light-reflecting point, which is located at a scanning position on a scanning path (R, A), the scanning position being adjustable by the low coherence interferometer (45), and a second part of the light is radiated as reference light onto a reference reflector (53) of the low coherence interferometer (45) and reflected there,
- the adjustable scanning position on the scanning path (R, A) is varied by means of the low coherence interferometer (45) for performing a longitudinal scan along the scanning path (R, A) and the reflected secondary measurement light and secondary reference light are combined at a beam junction (51) of the low coherence interferometer (45) in such a manner that the resulting detection light generates an interference signal upon incidence on a detector (63), the interference signal containing information about the strength of the reflection of the measurement light as a function of the particular set scanning position,
and a partial path (M1) of the measurement light path runs through the interior of one or more fluid-mounted light transport modules (2,35) of the scanning sensor.

5. Scanning system according to Claim 4, wherein a variable wavelength selection device (61) of the low coherence interferometer (45) is positioned in the light path of the detection light between the beam junction (51) and a detector (63), by which variable wavelength selection device the detection light may be selected as a function of its wavelength in such a manner that selectively light comprising wavelengths which correspond to a predetermined sequence of wavelengths k, preferentially reaches the detector, and different sequences of the wavelengths k can be set for varying the scanning position along the scanning path.

6. Scanning system according to any one of Claims 4 or 5, wherein a partial path (R1) of the reference light path also runs in a fluid-mounted light transport module (25, 35) of the scan sensor, this partial path (R1) of the reference light path is shorter than the partial path (M1) of the measurement light path running in one or more fluid-mounted light transport modules of the scanning sensor (1), and the scanning system comprises a wavelength compensation module (55) separate from the one or more light transport modules (2, 35) of the scanning sensor (1), for compensating the difference of the partial paths (R1, M1).

7. Scanning system according to any one of the preceding claims, wherein in the at least one fluid-mounted light transport module (2, 35) the primary light and the secondary light are guided by means of free space optics elements.

8. Scanning system according to any one of the preceding claims, wherein a light transport module (2) comprises light exit optics (19), which are adapted for emitting the primary light in the axial and/or radial directions.

9. Scanning system according to Claim 8, wherein the light exit optics (19) are a component of an exit optics module (23), which may be connected interchangeably to a fluid-mounted light transport module base part (25).

10. Scanning system according to any one of the preceding claims, wherein the fluid, by means of which the at least one light transport module (2, 35) is mounted, is a gas, in particular air.

11. Scanning system according to any one of the preceding claims, wherein the scanning sensor (1) comprises an axial position sensor (31) and/or a rotational position sensor (32) for determining the axial position and/or rotational angle position of a light transport module (2, 35), wherein a location marking (33, 34) is affixed to the light transport module (2, 35) which marking preferably is periodic.

12. Scanning system according to any one of the preceding claims, wherein the rotation-translation drive (27) comprises transport elements (28), which intermittently contact the wall (8) of a light transport module (2, 35) and execute step-by-step movements tangentially to the wall surface in such a manner that the light transport module (2, 35) is moved in the desired direction.

13. Scanning system according to Claim 12, wherein the transport elements (28) are moved piezoelectrically.

14. Scanning system according to any one of Claims 12 or 13, wherein a plurality of transport elements (8) are positioned distributed on the bearing part (3) in such a manner that the pressure exerted thereby on the wall (6) of the fluid-mounted light transport module (2, 35) is compensated such that it does not cause an interfering radial movement of the fluid-mounted light transport module (2, 35).

15. Scanning system according to any one of Claims 12 to 14, wherein the rotation-translation drive has separate transport elements for the axial movement on one hand and for the rotation of the at least one fluid-mounted light transport module (2, 35) on the other hand.

## Revendications

1. Système de palpage pour palper la surface (13, 14) d'un objet, en particulier pour une machine de mesure à coordonnées ou un robot de positionnement, dans lequel
le système de palpage inclut un palpeur (1) comprenant au moins un module de transport de lumière (2) supporté par fluide, le module de transport de lumière (2) étant entouré d'un élément de palier (3) qui fait également partie du palpeur, et un fluide se situant dans une fente de palier (7), entre la paroi extérieure (6) du module de transport de lumière (2) et l'élément de palier (3), au moyen duquel le module de transport de lumière (2) est monté de telle sorte qu'il soit mobile par rapport à l'axe de la paroi extérieure cylindrique aussi bien axialement qu'en rotation,
de la lumière primaire émanant d'une source lumineuse entrant dans le module de transport de lumière (2) en un lieu d'entrée de lumière primaire (11) est transportée par l'espace intérieur (8) du module de transport de lumière (2) vers un lieu de sortie de lumière primaire (12a, 12b) éloigné du lieu d'entrée de la lumière primaire dans la direction axiale à partir duquel elle peut être rayonnée en direction de la surface (13, 14) de l'objet, et sur celle-ci, et
de la lumière secondaire également réfléchie depuis la surface (13, 14) de l'objet, qui entre dans le module de transport de lumière (2) en un lieu d'entrée de lumière secondaire (16a, 16b) coïncidant de préférence avec le lieu d'entrée de lumière primaire (12a, 12b), est transportée par l'espace intérieur (8) du module de transport de lumière (2) vers un lieu de sortie de lumière secondaire (17) éloigné du lieu d'entrée de lumière secondaire (16a, 16b) dans la direction axiale, coïncidant de préférence avec le lieu d'entrée de lumière primaire (11), et
le module de transport de lumière est entraînable aussi bien dans la direction axiale qu'en rotation au moyen d'un entraînement de rotation - translation (27).

2. Système de palpage selon la revendication 1, dans lequel le palpeur (1) présente deux modules de transport de lumière (2, 35) supportés par fluide, un second module de transport de lumière guidé coaxialement avec le premier module de transport de lumière (2) servant de module de palpage longitudinal (35), étant mobile dans la direction axiale par rapport au premier module de transport de lumière et renfermant des éléments optiques, par lesquels la lumière primaire est transportée d'un lieu d'entrée de lumière primaire (39) du module de palpage longitudinal (35) vers un lieu de sortie de lumière primaire (40) éloigné dans la direction axiale d'où elle est redirigée dans le lieu d'entrée de lumière primaire (11) du premier module de transport de lumière (2), et par l'espace intérieur duquel de la lumière émanant également du lieu de sortie de lumière primaire (17) du premier module de transport de lumière (2) entre dans le module de palpage longitudinal (35) par l'intermédiaire d'un lieu d'entrée de lumière secondaire (41) qui coïncide de préférence avec le lieu de sortie de lumière primaire (40) du module de palpage longitudinal et est transportée vers un lieu de sortie de lumière secondaire (42) du module de palpage longitudinal (35) éloigné du lieu d'entrée de lumière secondaire (41) du module de palpage longitudinal (35) dans la direction axiale et coïncidant de préférence avec son lieu d'entrée de lumière primaire (39).

3. Système de palpage selon la revendication 2, dans lequel le module de palpage longitudinal (35) est supporté par fluide conjointement avec le premier module de transport de lumière (2) dans une pièce de palier commune (3).

4. Système de balayage selon l'une des revendications 1 à 3 qui comporte un interféromètre à courte cohérence (45) réalisé de telle sorte que
- la lumière primaire émanant de la source lumineuse (46) soit partagée en deux chemins lumineux au moyen d'un séparateur de faisceau (48, 51) de l'interféromètre à courte cohérence (45),
- une première partie de la lumière primaire soit rayonnée sur l'objet en tant que lumière de mesure au moyen de l'interféromètre à courte cohérence (45) de telle sorte qu'elle soit réfléchie en un lieu de réémission de lumière, qui se trouve en une position de palpage réglable au moyen de l'interféromètre à courte cohérence (45) sur un parcours de palpage (R, A) et une seconde partie de la lumière soit rayonnée en tant que lumière de référence sur un réflecteur de référence (53) de l'interféromètre à courte cohérence (45) et y soit réfléchie,
- la position de palpage réglable sur le parcours de palpage (R, A) soit variée pour la réalisation d'un palpage longitudinal le long du parcours de palpage (R, A) au moyen de l'interféromètre à courte cohérence (45), et la lumière de mesure secondaire réfléchie et la lumière de référence secondaire soient réunies en un guidage commun de faisceaux (51) de l'interféromètre à courte cohérence (45) de telle sorte que la lumière de détection résultante génère à la rencontre d'un détecteur (63) un signal d'interférence qui renferme une information sur l'intensité de la réflexion de la lumière de mesure en fonction à chaque fois de la position de palpage réglée,
et un parcours partiel (M1) du chemin de lumière de mesure s'étend à l'intérieur d'un ou plusieurs modules de transport de lumière (2, 35), supportés par fluide du palpeur.

5. Système de palpage selon la revendication 4, dans lequel un dispositif de sélection de longueur d'onde variable (61) de l'interféromètre à courte cohérence (45) est disposé dans le chemin lumineux de la lumière de détection entre le guidage commun des faisceaux (51) et le détecteur (63), par lequel la lumière de détection est sélectionnée en fonction de sa longueur d'onde de telle manière que de la lumière parvienne préférentiellement et sélectivement au détecteur avec des longueurs d'ondes qui correspondent à une suite prédéfinie de nombres d'ondes k et différentes suites de nombres d'ondes k soient réglables pour la variation de la position de palpage le long du parcours de balayage.

6. Système de balayage selon l'une des revendications 4 et 5, dans lequel un parcours partiel (R1) du chemin lumineux de référence s'étend également dans un module de transport de lumière (2, 35) supporté par fluide du palpeur, ce parcours partiel (R1) du chemin lumineux de référence est plus petit que le parcours partiel (M1) du chemin de lumière de mesure s'étendant dans un ou plusieurs modules de transport de lumière supportés par fluide, et le système de palpage présente un module d'égalisation de longueur d'onde (55) séparé de l'un ou plusieurs des modules de transports de lumière (2, 35) du palpeur (1) pour égaliser la différence des parcours partiels (R1, M1).

7. Système de palpage selon l'une des revendications précédentes, dans lequel la lumière primaire et la lumière secondaire sont guidées dans le au moins un module de transport de lumière (2, 35) supporté par fluide au moyen d'éléments otiques à rayonnement libre.

8. Système de palpage selon l'une des revendications précédentes, dans lequel un module de transport de lumière (2) présente une optique de sortie de lumière (19) qui est réalisée de telle sorte que la lumière primaire puisse être rayonnée dans la direction axiale et/ou radiale.

9. Système de palpage selon la revendication 8, dans lequel l'optique de sortie de lumière (19) est une partie d'un module optique de sortie (23) qui peut être relié de manière interchangeable à une partie de base de module de transport de lumière (25) supportée par fluide.

10. Système de palpage selon l'une des revendications précédentes, dans lequel le fluide au moyen duquel est supporté le au moins un module de transport de lumière (2, 35) est un gaz, en particulier de l'air.

11. Système de palpage selon l'une des revendications précédentes, dans lequel le palpeur (1) inclut un capteur de position axiale (31) et/ou un capteur de position de rotation (32) pour la détermination de la position axiale et/ou de la position angulaire de rotation d'un module de transport de lumière (2, 35), un repère local (33, 34) de préférence périodique étant monté sur le module de transport de lumière (2, 35).

12. Système de palpage selon l'une des revendications précédentes, dans lequel l'entraînement de rotation - translation (27) présente des éléments de transport (28) qui sont pressés par intermittence contre une paroi (8) d'un module de transport de lumière (2, 35) et exécutent alors des déplacements pas à pas tangentiellement à la surface de paroi de telle sorte que le module de transport de lumière (2, 35) soit déplacé dans la direction souhaitée.

13. Système de palpage selon la revendication 12, dans lequel les éléments de transport (28) sont déplacés piézoélectriquement.

14. Système de palpage selon l'une des revendications 12 et 13, dans lequel plusieurs éléments de transport (8) sont répartis sur la pièce de palier (3) de telle sorte que la pression qu'ils exercent sur la paroi (6) du module de transport de lumière (2, 35) supporté par fluide soit compensée de telle sorte qu'elle ne provoque aucun déplacement radial gênant du module de transport de lumière (2, 35) supporté par fluide.

15. Système de palpage selon l'une des revendications 12 à 14, dans lequel l'entraînement de rotation - translation présente des éléments de transport séparés d'une part pour le déplacement axial et d'autre part pour la rotation du au moins un module de transport de lumière (2, 35) supporté par fluide.
